(19) Europäisches Patentamt
European Patent Office
Office européen des brevets

(11) Publication number: **0 005 813**
**B1**

(12) **EUROPEAN PATENT SPECIFICATION**

(45) Date of publication of patent specification: **15.09.82**

(51) Int. Cl.³: **C 08 F 14/04**, C 08 F 2/18

(21) Application number: **79101628.0**

(22) Date of filing: **28.05.79**

(54) **Suspension polymerization process.**

(30) Priority: **30.05.78 US 910306**

(43) Date of publication of application:
**12.12.79 Bulletin 79/25**

(45) Publication of the grant of the patent:
**15.09.82 Bulletin 82/37**

(84) Designated Contracting States:
**BE DE FR GB IT LU NL**

(56) References cited:
**GB - A - 899 645**
**Encyclopedia of Polymer Science and Technology, Vol-14, p. 340 (Interscience 1971).**

The file contains technical information submitted after the application was filed and not included in this specification.

(73) Proprietor: **The B.F. GOODRICH Company**
**Dept. 0015 WHB-6 500 South Main Street**
**Akron, Ohio 44318 (US)**

(72) Inventor: **Longeway, George David**
**18645 Detroit Road**
**Lakewood Ohio 44107 (US)**

(74) Representative: **von Kreisler, Alek, Dipl.-Chem. et al,**
**Deichmannhaus am Hauptbahnhof**
**D-5000 Köln 1 (DE)**

**EP 0 005 813 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Suspension polymerization process

## Background of the invention

When making homopolymers and copolymers of vinyl and vinylidene halides by means of the aqueous suspension polymerization procedure, these polymerizations are exothermic and display a steadily increasing heat load. Frequently, this heat load becomes so severe late in the polymerization that the isothermal control is lost and the reaction "tailpeaks", or its temperature rises significantly above its set point. This tailpeak limits the amount of initiator and monomer, or monomers, which can be charged to the reactor, and therefore, limits the productivity of the reactor.

A number of different methods have been heretofore proposed to overcome the difficulty of tailpeaks. In the prior art it has been suggested to polymerize at one temperature for a certain period of time and then change the temperature. This does not solve the problem. Elaborate computer techniques have been proposed. However, computer equipment may be expensive and difficult to install. Accordingly, a simplified process for ramping the temperature during a polymerization reaction is greatly desired.

## Summary of the invention

I have found that homopolymers and copolymers of vinyl and vinylidene halides can be produced with increased efficiency if the temperature is controlled carefully throughout the reaction cycle. The present invention involves temperature programming of a suspension polymerization in order to obtain an essentially constant and linear polymerization rate. This temperature programming enables the use of higher catalyst concentrations with higher percentage of conversion than that of the isothermal charges in the same length of time. This results in increased productivity of polymer.

## Detailed description

An aqueous suspension polymerization process is described for producing polymers of vinyl and vinylidene halides and copolymers thereof with each other or either with one or more vinylidene monomers having at least one terminal

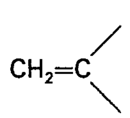

grouping, wherein said monomer(s) are polymerized in the presence of a suspending agent and a free-radical producing catalyst, characterized in that the polymerization reaction rate is substantially linearized by conducting the polymerization reaction at a temperature between 50°C and 100°C up to about 10% conversion of monomer(s) to polymer, employing about 5% to about 25% more catalyst in said reaction than about 0.01 part to about 1.0 part by weight thereof, based on the weight of the monomer(s), thereafter continuing the polymerization at an essentially constant and linear rate by gradually and constantly reducing or increasing the temperature of the reaction mixture by about 2°C to about 10°C until a conversion of monomer(s) to polymer of about 70% is reached, and continuing said reaction at the temperature reached at 70% conversion until the desired conversion of monomer(s) has been obtained. Accordingly during the suspension polymerization of any polymerizable ethylenically unsaturated monomer or monomers the temperature is gradually reduced or increased during the course of the reaction in order to obtain an essentially constant reaction rate and linearize the reaction rate profile as a function of time. The important thing is to have as constant a reaction rate as possible throughout the course of polymerization reaction; thus the temperature of the reaction mixture should be reduced or increased by 2 to 10°C, preferably by 70°C until a conversion of monomer(s) to polymer of about 70% is reached. Normal suspension polymerization reactions are isothermal, that is they are operated under conditions of constant temperature and are marked by changes of volume or pressure. Isothermal polymerization show a steadily increasing reaction rate with conversion, usually resulting in such a high heat load late in the polymerization that the isothermal control is lost and the reaction tailpeaks, that is, the reaction rate increases very rapidly. Under isothermal conditions, the average rate of reaction may be only 70% of that of the peak, so that during most of the reaction some of the heat removal capability goes unused. However, by temperature programming and linearizing the reaction rate, this average can be pushed to 80% or higher.

While the present invention is specifically illustrated hereinafter with regard to the suspension polymerization of vinyl chloride, it is to be understood that the process may likewise be applied in the suspension polymerization of any polymerizable ethylenically unsaturated monomer or monomers. Examples of such monomers are other vinyl halides and vinylidene halides, such as vinyl bromide, vinylidene chloride, etc.; vinylidene monomers having at least one terminal

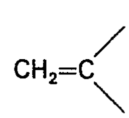

grouping, such as esters of acrylic acid, for example methyl acrylate, ethyl acrylate, butyl acrylate, octyl acrylate, cyanoethyl acrylate, and the like; vinyl acetate; esters of methacrylic acid such as methyl methacrylate, butyl

methacrylate, and the like; styrene and styrene derivatives including $\alpha$-methyl styrene, vinyl toluene, chlorostyrene; vinyl naphthalene; diolefins including butadiene, isoprene, chloroprene, and the like; and mixtures of any of these types of monomers and other vinylidene monomers copolymerizable therewith; and other vinylidene monomers of the types known to those skilled in the art.

The present invention, however, is particularly applicable to the suspension polymerization of vinyl chloride, either alone or in admixture with one or more other vinylidene monomers having at least one terminal

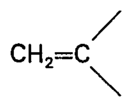

grouping, copolymerizable therewith in amounts as great as about 80% or more by weight of comonomer, based on the weight of the monomer mixture.

Among the initiators or catalysts which may be employed in the practice of the present invention are the alkanoyl, aroyl, alkaroyl and aralkanoyl diperoxides and mono-hydroperoxides, azo compounds, peroxy-esters, percarbonates, and the like. Illustrative of such catalysts are benzoyl diperoxide, lauryl diperoxide, diacetyl peroxide, cumene hydroperoxides, methyl ethyl ketone peroxide, diisopropylbenzene hydroperoxide, 2,4-dichlorobenzoyl peroxide, naphthoyl peroxide, acetyl cyclohexane sulfonyl peroxide, t-butyl perbenzoate, di-t-butyl perphthalate, diisopropyl peroxydicarbonate, di(sec-butyl)peroxydicarbonate, and the like, azo-bis-isobutyronitrile, alpha, alpha'-azodiisobutyrate, and the like. The choice of any particular free-radical catalyst or initiator is dictated in part by the particular monomer or monomers to be polymerized and by the color requirements of the polymer.

In the isothermal suspension polymerization process the temperature is kept constant throughout the entire polymerization period. This is accomplished by circulating a cooling medium through the jacket of the polymerization reactor, said cooling medium being a material such as water. However, removal of heat during the first part of the reaction is not efficient since one is not utilizing the entire cooling efficiency of the jacket. As the polymerization proceeds, the rate of reaction increases and thus the heat increases and removal of this excess heat cannot be accomplished fast enough with the standard jacket and the standard cooling means. That is to say, if it is necessary to remove 2,110,000 KJ during the course of the reaction per hour, in the first part of the reaction while the capacity for such removal is there in the jacket, only 1,055,000 KJ per hour will be removed inasmuch as the reaction is slow in the early part of the polymerization process. Then as the reaction rate increases, it becomes very difficult to remove the 2,110,000 KJ per hour while trying to maintain the temperature of the reaction mixture constant.

When using the temperature programming of the instant invention this problem of heat removal is overcome. More importantly, the idea is to linearize the reaction rate and thereby reduce the excessive heat buildup. This is accomplished by operating the first part of the reaction up to approximately 10% conversion at a higher temperature than usual and then gradually reducing the temperature over a period of time up to approximately 70% conversion, which gradual reduction in temperature of the reaction mixture is referred to as "ramping". The temperature of the reaction mixture will usually be reduced in the range of about 2°C to about 10°C. This of course, has the effect of approximately linearizing the reaction rate. This linearization of the reaction rate by means of the present invention, enables the use of more catalyst and/or more monomer thereby increasing the productivity of polymer or polyvinyl chloride (PVC) and surprisingly in less time than in the isothermal polymerization procedure.

On the other hand, with some of the monomers set out above and the choice of catalyst, it may be necessary to ramp the temperature of the reaction upward in order to obtain linearization of the reaction rate. In this situation, the initial temperature of the reaction mixture will be below that normally employed and then after 10% conversion has been reached, gradually increased until 70% or more conversion is reached in order to linearize the reaction rate. This increase in temperature will correspond to the decrease in temperature previously referred to and referred to hereinafter.

Inasmuch as temperature programming utilizes a steadily falling temperature throughout most of the polymerization run, the pressure in the reactor will also steadily fall. However, if one compares the reactor pressure to the vapor pressure of for example, vinyl chloride, at the reactor temperature, the two are equal up to slightly over 70% conversion, at which time the reactor pressure steadily drops in relation to the vapor pressure of vinyl chloride at the reaction temperature. This is referred to as the pressure drop period. Temperature programming has the effect of linearizing the reaction rate only in the region of about 10% conversion up to pressure drop. Beyond pressure drop, there will be a significant increase in the reaction rate. Eventually, this increased rate may exceed the heat removal capability and the temperature "tailpeaks". However, the point in the reaction cycle at which this occurs will be higher in conversion for temperature programmed charges than for the isothermal charges. If the onset of the tail peak is used to terminate the run or charge, it has been found that the temperature program charges will run about 1.0% to about

10.0% higher in conversion than the isothermal charges.

As has been previously pointed out, when using the temperature programming of the instant invention, increased productivity will occur as the initiator or catalyst level is increased. Usually in isothermal polymerization reactions a catalyst will be employed in the range of about 0.01 part to about 1.0 part based on the weight of the monomer or monomers employed in the reaction. By use of the present invention, catalyst or initiator concentration can be increased by about 5% to about 25% by weight over and above that normally used. For example, when employing 0.041 part by weight of the catalyst in the temperature programming reaction process, the average rate of reaction is increased approximately 15% and the reactor productivity is increased about 10%. While further increases in the initiator level are possible, this will decrease the safety margin between the reaction rate maximum, which occurs near 25% conversion, and the heat removal capability.

In order to more clearly define the present invention, the following specific examples are given. It is to be understood, however, that this is merely intended in an illustrative and not in a limitative sense. In the Examples, all parts and percents are by weight unless otherwise indicated.

Example I

In this Example, vinyl chloride was polymerized isothermally for comparative purposes. An 4158 L polymerizer or reactor was employed and the following recipe was charged to the reactor in the usual fashion:

Recipe for Example I

| | Part |
|---|---|
| Vinyl chloride | 100 |
| Water (demineralized) | 200 |
| Vinol 540[1] (Registered Trade Mark) | 0.05 |
| SBP[2] (catalyst) | 0.05 |

[1]89% hydrolyzed polyvinyl acetate
[2]di-secondary butyl peroxydicarbonate

The polymerization charge was then run isothermally at a set point of 50°C, and took 280 minutes or 4.7 hours to reach 80% conversion. This recipe actually developed more heat than the reactor could remove, as was evidenced by a 1-1/2° tailpeak, that is, temperature rise above set point, late in the polymerization.

Example II

In this Example the same reactor as was employed in Example I was used and the same recipe as Example I was charged to the vessel with the exception that the catalyst level was increased to 0.0575 part. The polymerization was then run using temperature programming wherein initial set point was 4 degrees higher than in Example I, or a temperature of 54°C and this temperature was maintained up to 10% conversion. Thereafter, the steady downward ramp or reduction in temperature was begun, reaching 46°C at 70% conversion. This lower set point of 46°C was then maintained throughout the remainder of the polymerization reaction. This charge required only 240 minutes or four hours to reach 80% conversion. This showed that the average reaction rate had been increased 17% by using the temperature programming process of the instant invention. Further, the charge only developed a 1/2°C tailpeak late in the polymerization, thus only barely exceeding the heat removal capabilities of the reactor. These results clearly show the superiority of the instant invention over the prior art processes.

By employing the temperature programming of the instant invention it has the advantage of obtaining a substantially constant reaction rate and linearizing the reaction rate. With a substantial constant and linear reaction rate it is possible to utilize the heat removal capabilities of the reactors being employed. A further advantage is that more catalyst or monomer can be employed in the reaction thus resulting in increased production per unit.

This increased production is accomplished without additional capital investment which is a great advantage. Further, the resin properties have not significantly changed when employing the instant invention, for example, such properties as porosity, powder mix time, average particle size, particle size distribution, apparent density, and compact density or flow time. Numerous other advantages of the present invention will be apparent to those skilled in the art.

**Claims**

1. An aqueous suspension polymerization process for producing polymers of vinyl and vinylidene halides and copolymers thereof with each other or either with one or more vinylidene monomers having at least one terminal

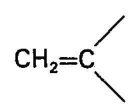

grouping, wherein said monomer(s) are polymerized in the presence of a suspending agent and a free-radical producing catalyst, characterized in that the polymerization reaction rate is substantially linearized by conducting the polymerization reaction at a temperature between 50°C and 100°C up to about 10% conversion of monomer(s) to polymer, employing about 5% to about 25% more catalyst in said reaction than about 0.01 part to about 1.0 part by weight thereof, based on the weight of the monomer(s), thereafter continuing the polymerization at an essentially constant and linear rate by gradually and constantly reducing or increasing the temperature of the reaction mixture by about 2°C to about 10°C until a conversion of monomer(s) to polymer of about 70% is reached, and continuing said reaction at the temperature reached at 70% conversion until the desired conversion of monomer(s) has been obtained.

2. A process as defined in Claim 1 wherein the monomer is vinyl chloride.

3. A process as defined in Claim 1 wherein the temperature of the reaction mixture is gradually reduced by 7°C.

4. A process as defined in Claim 1 wherein the starting reaction temperature is 54°C and is then gradually reduced to 46°C.

5. A process as defined in Claim 1 wherein the catalyst is di-secondary butyl peroxydicarbonate.

6. A process as defined in Claim 1 wherein the suspending agent is 89% hydrolyzed polyvinyl acetate.

7. A process as defined in Claim 1 wherein the reaction is continued until 80% conversion is obtained.

8. A process as defined in Claim 2 wherein the temperature of the reaction mixture is gradually reduced by 8°C.

9. A process as defined in Claim 8 wherein the catalyst is di-secondary butyl peroxydicarbonate.

10. A process as defined in Claim 9 wherein the suspending agent is 89% hydrolyzed polyvinyl acetate.

**Revendications**

Procédé de polymérisation en suspension aqueuse pour la production de polymères d'halogénures de vinyle et de vinylidène et de leurs copolymères les uns avec les autres ou avec un ou plusieurs monomères vinylidéniques comportant au moins un groupement

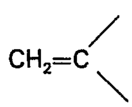

terminal, le ou lesdits monomères étant polymérisés en présence d'un agent de suspension et d'un catalyseur générateur de radicaux libres, caractérisé en ce qu'on rend pratiquement linéaire la vitesse de réaction de polymérisation en conduisant la réaction de polymérisation à une température entre 50°C et 100°C jusqu'à environ 10% de conversion du ou des monomères en polymère, en utilisant dans ladite réaction environ 5% à environ 25% de catalyseur en plus par rapport à environ 0,01 partie à environ 1,0 en poids de celui-ci, calculé par rapport au poids du ou des monomères, en poursuivant ensuite la polymérisation à une vitesse pratiquement constante et linéaire en réduisant ou en augmentant graduellement et de façon constante la température du mélange réactionnel d'environ 2°C à environ 10°C jusqu'à obtention d'un taux de conversion du ou des monomères en polymère d'environ 70% et en poursuivant ladite réaction à la température atteinte à 70% de conversion jusqu'à obtention du taux de conversion désiré du ou des monomères.

2. Procédé tel que défini dans la revendication 1, caractérisé en ce que le monomère est du chlorure de vinyle.

3. Procédé tel que défini dans la revendication 1, caractérisé en ce que la température du mélange réactionnel est graduellement réduite de 7°C.

4. Procédé tel que défini dans la revendication 1, caractérisé en ce que la température de réaction initiale est de 54°C et qu'elle est ensuite progressivement réduite jusqu'à 46°C.

5. Procédé tel que défini dans la revendication 1, caractérisé en ce que le catalyseur est le peroxydicarbonate de dibutyle secondaire.

6. Procédé tel que défini dans la revendication 1, caractérisé en ce que l'agent de suspension est du poly(acétate de vinyle) hydrolysé à 89%.

7. Procédé tel que défini dans la revendication 1, caractérisé en ce que l'on poursuit la réaction jusqu'à obtention d'un taux de conversion de 80%.

8. Procédé tel que défini dans la revendication 2, caractérisé en ce que la température du mélange réactionnel est progressivement réduite de 8°C.

9. Procédé tel que défini dans la revendication 8, caractérisé en ce que le catalyseur est le peroxydicarbonate de dibutyle secondaire.

10. Procédé tel que défini dans la revendication 9, caractérisé en ce que l'agent de suspension est du polyacétate de vinyle hydrolysé à 89%.

**Patentansprüche**

1. Verfahren zur Polymerisation in wäßriger Suspension zur Herstellung von Polymerisaten aus Vinyl- und Vinylidenhalogeniden und Copolymerisaten aus diesen miteinander oder mit einem oder mehreren Vinyliden-Monomeren, die mindestens eine endständige

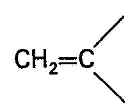

-Gruppierung besitzen, bei dem das Monomere oder die Monomeren in Gegenwart eines Suspensionsmittels und eines freie Radikale erzeugenden Katalysators polymerisiert werden, dadurch gekennzeichnet, daß der Polymerisationsumsatzt im wsentlichen dadurch linearisiert wird, daß die Reaktion bis zu einer etwa 10-proz. Umwandlung des/der Monomeren in das Polymere bei einer Temperatur zwischen 50°C und 100°C durchgeführt wird,

etwa 5 bis 25 Gew.-% mehr Katalysator als etwa 0,01 bis 1,0 Gew.-Teil desselben, bezogen auf das Gewicht des/der Monomeren, in der Reaktion eingesetzt werden, danach die Polymerisation bis zum Erreichen einer etwa 70-proz. Umwandlung des/derMonomeren in das Polymere mit einem im wesentlichen konstanten und linearen Umsetzungsgrad durch allmähliches und konstantes Erniedrigen oder Erhöhen der Temperatur der Reaktionsmischung um etwa 2°C bis 10°C fortgeführt wird und die Polymerisation bei derjenigen Temperatur, die bei der 70-proz. Umwandlung erreicht wurde, fortgeführt wird, bis die gewünschte Umwandlung des/der Monomeren stattgefunden hat.

2. Verfahren nach Anspruch 1, dadurch gekennzeichnet, daß das Monomere Vinylchlorid ist.

3. Verfahren nach Anspruch 1, dadurch gekennzeichnet, daß die Temperatur der Reaktionsmischung allmälich um 7°C erniedrigt wird.

4. Verfahren nach Anspruch 1, dadurch gekennzeichnet, daß die Ausgangs-Reaktionstemperatur 54°C beträgt und die Temperatur allmählich auf 46°C erniedrigt wird.

5. Verfahren nach Anspruch 1, dadurch gekennzeichnet, daß der Katalysator Di-sec-butylperoxydicarbonat ist.

6. Verfahren nach Anspruch 1, dadurch gekennzeichnet, daß das Suspensionsmittel zu 89% hydrolysiertes Polyvinylacetat ist.

7. Verfahren nach Anspruch 1, dadurch gekennzeichnet, daß die Reaktion fortgeführt wird, bis eine 80-proz. Umwandlung erreicht ist.

8. Verfahren nach Anspruch 2, dadurch gekennzeichnet, daß die Temperatur der Reaktionsmischung allmählich um 8°C erniedrigt wird.

9. Verfahren nach Anspruch 8, dadurch gekennzeichnet, daß der Katalysator Di-sec-butylperoxydicarbonat ist.

10. Verfahren nach Anspruch 9, dadurch gekennzeichnet, daß das Suspensionsmittel zu 89% hydrolysiertes Polyvinylacetat ist.